# EUROPÄISCHE PATENTSCHRIFT

(11) **EP 0 788 633 B1**
(45) Veröffentlichungstag und Bekanntmachung des Hinweises auf die Patenterteilung: **15.04.1998**
(21) Anmeldenummer: 95935361.6
(22) Anmeldetag: 26.10.1995
(51) Int. Cl.: G06K 7/08, G06K 19/07

(54) **SYSTEM ZUR KONTAKTLOSEN ENERGIE- UND DATENÜBERTRAGUNG**
CONTACTLESS ENERGY AND DATA TRANSMISSION SYSTEM
SYSTEME POUR LA TRANSMISSION D'ENERGIE ET D'INFORMATION SANS CONTACT

(30) Priorität: 26.10.1994 DE 4438287
(43) Veröffentlichungstag der Anmeldung: 13.08.1997
(73) Patentinhaber: SIEMENS AKTIENGESELLSCHAFT, 80333 München (DE)
(72) Erfinder: FELDTKELLER, Martin, D-81543 München (DE); GREIDERER, Reinhard, D-80803 München (DE); MARQUARDT, Kurt, D-81673 München (DE); NOLLES, Jürgen, D-81825 München (DE); REINER, Robert, D-82008 Unterhaching (DE)
(86) Internationale Anmeldenummer: DE9501491
(87) Internationale Veröffentlichungsnummer: WO9613792

(56) Entgegenhaltungen:
- EP-A- 0 297 688
- WO-A-93/23908
- DE-A- 2 748 584
- DE-A- 4 242 112

## Beschreibung

Die Erfindung betrifft ein System zur kontaktlosen Energie- und Datenübertragung gemäß dem Oberbegriff des Anspruchs 1.

Derartige Systeme bestehen zumeist aus einer stationären Station und einem Mobilteil, z.B. in Form einer Chipkarte, eines Chipschlüssels usw. Die stationäre Station stellt hierbei die Energie für den Mobilteil zur Verfügung. Hierzu ist zumeist ein lose gekoppeltes Spulenpaar, wobei jede Spule einem Schwingkreis im Mobil- bzw. stationären Teil zugeordnet ist, vorgesehen. Die Energieübertragung erfolgt dabei durch ein hochfrequentes Signal, welches im Mobilteil einer Gleichrichtereinheit und nachgeschalteten Regeleinheit zugeführt wird.

Bei derartigen Systemen mit kontaktloser Energieübertragung ist der Wirkungsgrad am höchsten, wenn die Übertragungsfrequenz des Primärkreises der Resonanzfrequenz des Sekundärkreises entspricht. Der Primärkreis stellt hierbei z.B. den Schwingkreis des stationären Teils dar und der Sekundärkreis den des Mobilteils. Aufgrund von Bauteileschwankungen ist diese Anforderung nur innerhalb der Summe der Bauteiltoleranzen zu erreichen. Die technischen Anforderungen an Verlustleistung, Güte der Bauelemente, Kopplungsfaktor von Primär- und Sekundärkreis etc. machen einen Abgleich des Sekundärkreises notwendig.

In der deutschen Patentschrift DE 38 10 702 C2 ist eine Einrichtung zur kontaktlosen Energie- und Datenübertragung angegeben, bei der die stationäre Station einen abstimmbaren Schwingkreis enthält. Dieser wird von einer Steuerschaltung angesteuert, um eine Abstimmung auf einen Schwingkreis im mobilen Teil durchzuführen, so daß ein möglichst guter Empfang erreicht wird. Zur Abstimmung sind parallel zum Schwingkreis des stationären Teils Kapazitätsdioden geschaltet, die durch eine aus einem Regelkreis abgeleitete wertekontinuierliche Steuerspannung gesteuert werden. Durch Veränderung der Steuerspannung werden die Kapazitätsdioden nachgestellt, so daß der Verstimmung des Kreises entgegengewirkt wird.

WO-A-93/23908 beschreibt ein System zur kontaktlosen Energie und Datenübertragung gemäß dem Oberbegriff des Anspruchs 1.
Aus dieser Beschreibung ist bekannt bei einem Sender, der miteinem Schwingkreis und zwei Wechselrichtern gebildet ist, zum Abgleich der Sendefrequenz zwei Kondensatoren vorzusehen, die über zwei Schalter zueinander in Reihe und parallel zum Kondensator des Schwingkreises geschaltet werden können. Jedoch wird hier nur der Sender angesprochen, und nicht die Empfänger in den mobilen Teile.

Aufgabe der vorliegenden Erfindung ist es daher, ein System zur kontaktlosen Energie- und Datenübertragung anzugeben, das die obigen Anforderungen auf einfache Weise erfüllt und bei dem der abstimmbare Schwingkreis in der mobilen Station vorliegt.

Diese Aufgabe wird durch den kennzeichnenden Teil des Anspruchs 1 gelöst. Weiterbildungen sind Kennzeichen der Unteransprüche.

Vorteil der vorliegenden Erfindung ist es, daß durch das Bereitstellen von zusätzlich zuschaltbaren Kapazitäten zur Kapazität des Schwingkreises im Primär- oder Sekundärkreis die Resonanzfrequenz auf einfache Weise abgeglichen werden kann. Der Abgleich kann manuell oder automatisch erfolgen.

In einer weiteren vorteilhaften Ausgestaltung kann ein automatischer Abgleich erfolgen, indem ausgehend von einem Mittelwert der Resonanzfrequenz durch Zu- bzw. Wegschalten der zusätzlichen Kapazitäten ein optimaler Abgleich erfolgen kann.

In einer weiteren vorteilhaften Ausgestaltung kann der so ermittelte Wert in einem nichtflüchtigen Speicher des Mobilteils abgespeichert werden und steht somit bei jeder neuen Kopplung sofort zur Verfügung.

Wenn die zuschaltbaren Kapazitäten jeweils als eine Serienschaltung aus zwei Kapazitäten ausgeführt werden, die über je ein Schaltmittel an ein aus dem Schwingkreissignal erzeugtes Versorgungspotential schaltbar sind, ist ein Betrieb der integrierbaren Steuerschaltung mit geringerer Versorgungsspannung möglich.

Die Erfindung wird nachfolgend anhand der in der Zeichnung dargestellten Figuren näher erläutert. Es zeigen:
- Figur 1: eine erste Ausführungsform des Empfangsteils eines erfindungsgemäßen Systems und
- Figur 2: eine zweite Ausführungsform.

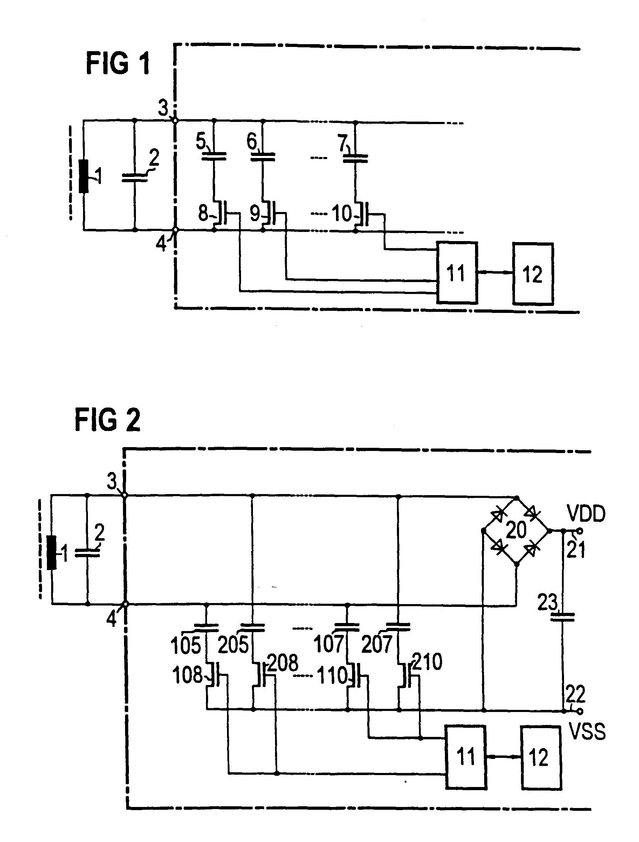

Im Ausführungsbeispiel der Figur 1 ist mit 1 eine Übertragungsspule und mit 2 eine Kapazität, die der Spule parallel geschaltet ist und die zusammen mit der Übertragungsspule den Schwingkreis bildet, dargestellt. Die Anschlüsse des Schwingkreises führen zu Kontakten 3, 4 einer integrierten Schaltung. Die integrierte Schaltung enthält, nicht näher dargestellt, die jeweils erforderlichen Energieübertragungs- und Datenübertragungsschaltkreise sowie die nachgeschalteten Auswerteeinheiten. Im dargestellten Beispiel der Figur 1 ist lediglich die Anpassungsschaltung zum Abgleich der Resonanzfrequenz des Schwingkreises bezeichnet. So sind mit 5, 6 und 7 drei von z.B. n parallel schaltbaren Kapazitäten dargestellt. Diese sind einerseits jeweils mit dem Anschlußkontakt 3 und andererseits jeweils über die Laststrecke eines jeweils zugehörigen Schalttransistors 8, 9, 10 mit dem Schaltkontakt 4 verbunden. Die Steueranschlüsse der Schalttransistoren 8, 9, 10 sind jeweils mit Steuerausgängen einer Ansteuereinheit 11 verbunden. Die Ansteuereinheit 11 ist mit einem nichtflüchtigen Speicher 12 gekoppelt.

Die zusätzlichen schaltbaren Kapazitäten 5, 6, 7 dienen zum Abgleich z.B. des Sekundärschwingkreises des Mobilteils. Sie sind in ihrer Größe so gewählt, daß die Toleranzen der externen Bauelemente 1, 2 kompensiert werden können. Der Abgleich erfolgt z.B. in der Weise, daß die Kapazitäten 5, 6, 7 parallel zum externen Schwingkreis 1, 2 zu- oder weggeschaltet werden können. Zu diesem Zweck ist ein Teil der Kapazitäten 5, 6, 7 vor dem Abgleichvorgang, d.h. während der sogenannten Power-on-Phase des integrierten Schaltkreises bereits zugeschaltet. Mit dem Abgleichvorgang werden diese entweder weggeschaltet oder durch zusätzliche Kapazitäten ergänzt. Der zum Abgleich des Schwingkreises notwendige Wert der Kapazitäten wird z.B. in einem EEPROM 12 abgelegt, und wird während des Anlaufvorganges des integrierten Schaltkreises zum Abgleich der spezifischen externen Beschaltung abgerufen.

Durch die vor dem Abgleich zugeschalteten Kapazitäten werden der abgleichbare Toleranzbereich und die Resonanzfrequenz zentriert. Damit verbessert sich das Anlaufverhalten und durch die Vorabstimmung werden größere Toleranzen zulässig und der Abgleichbereich erweitert sich sowohl auf den negativen wie auf den positiven Toleranzbereich.

Die Steuereinheit 11 kann dabei so ausgestaltet sein, daß sie z.B. über den bereits auf der integrierten Schaltung zumeist vorhandenen Mikroprozessor während der Power-on-Phase so angesteuert wird, daß automatisch ein Abgleich des Systems erfolgt. Hierzu muß lediglich eine Analog-Digital-Schnittstelle vorgesehen sein, welche dem Prozessor mitteilt, wann die optimale Resonanzfrequenz eingestellt ist. Ein derartiges dem Analog-Digital-Wandler zuführbares Signal läßt sich einfach zumeist aus der Spannungsversorgung des Mobilteils ableiten.

Ebenso könnte der Abgleich auch im stationären Teil erfolgen und müßte dann jeweils vor Inbetriebnahme der Datenübertragung mit dem Mobilteil für jedes Mobilteil separat erfolgen. Vorteil einer derartigen Anordnung wäre, daß die integrierten Schaltungen der Mobilteile weniger Chipfläche beanspruchen würden.

Bei dem in der Figur 2 gezeigten Ausführungsbeispiel für den Mobilteil umfassen die parallel zum Schwingkreis 1, 2 geschalteten Kapazitäten für den Abgleich jeweils eine erste und eine zweite Kapazität, die über ein Schaltelement miteinander verbindbar und somit dem Schwingkreis 1, 2 parallel schaltbar sind. Im einzelnen ist der Kondensator 105 an einem ersten Anschluß mit dem Anschluß 4 des Schwingkreises 1, 2 verbunden, ein Kondensator 205 mit dem Anschluß 3 des Schwingkreises 1, 2. Die anderen Anschlüsse der Kondensatoren 105, 205 sind über je einen Schalttransistor 108 bzw. 208 mit einem Anschluß 22 für ein Versorgungspotential VSS verbunden. Die Steueranschlüsse der Transistoren 108, 208 sind miteinander verbunden und werden von der Ansteuereinheit 11 zur Abstimmung des Schwingkreises 1, 2 auf die Resonanzfrequenz wie oben beschrieben angesteuert. In entsprechender Weise sind weitere Kondensatorpaare vorgesehen, beispielsweise die Kondensatoren 107 und 207 mit jeweils zugeordneten Schalttransistoren 110 bzw. 210.

Das Versorgungspotential VSS ist der negative Pol der aus dem Parallelschwingkreis an den Anschlüssen 3, 4 abgegriffenen gleichgerichteten und geglätteten Versorgungsspannung. Durch diese wird die integrierte Steuerungsschaltung mit Spannung versorgt. Hierzu ist ein Brückengleichrichter 20 eingangsseitig mit den Anschlüssen 3, 4 verbunden. An dessen Ausgangsseite ist ein Glättungskondensator 23 angeschlossen, an dessen einem Anschluß 22 das negative Versorgungspotential VSS und an dessen anderem Anschluß 21 das positive Versorgungspotential VDD anliegen.

Bei der in der Figur 1 gezeigten Ausführungsform wirken die als Schaltmittel vorgesehenen Schalttransistoren 8, 9, 10 als Transfer-Transistoren. Zum Durchschalten der Transistoren ist eine positive Gate-Source-Spannung notwendig. Da das Potential am Anschluß 4 nicht auf einem Bezugspunkt festliegt, kann es vorkommen, daß der jeweilige Schalttransistor nicht sicher eingeschaltet oder nicht sicher ausgeschaltet werden kann. Um ein korrektes Ein- bzw. Ausschalten der Transistoren sicherstellen zu können, benötigt die Schaltung eine relativ hohe Versorgungsspannung. Dies bedeutet andererseits, daß die Anforderungen an den Toleranzbereich der Versorgungsspannung erhöht sind. Die Versorgungsspannung muß also möglichst hoch und möglichst stabil bereitgestellt werden.

Im Gegensatz dazu ist der jeweilige Schalttransistor im Ausführungsbeispiel der Figur 2 nicht wie im Fall der Figur 1 schwebend in den Verbindungspfad zwischen die Anschlüsse 3, 4 des Parallelschwingkreises geschaltet, sondern mit dem Bezugspotential VSS verbunden. Wenn beispielsweise die Transistoren 108, 208 eingeschaltet sind, wird der Kondensator 105 zwischen den Anschluß 4 und Bezugspotential VSS wirksam, der Kondensator 205 zwischen den Anschluß 3 und Bezugspotential VSS. In diesem Fall werden die Kondensatoren 105, 205 als Reihenschaltung zwischen den Anschlüssen 3, 4 des Schwingkreises 1, 2 wirksam. Aus diesen Gründen arbeitet die Schaltung auch bei geringerer Versorgungsspannung. Entsprechend ist ein höherer Schwankungsbereich für die Versorgungsspannung zulässig.

## Patentansprüche

1. System zur kontaktlosen Energie- und Datenübertragung zwischen einer mobilen und einer stationären Station, bei dem die mobile Station einen abstimmbaren Schwingkreis (1, 2) aufweist, der von einer Steuerschaltung (12) angesteuert wird, wobei die Steuerschaltung (12) eine Vielzahl von parallel zum Schwingkreis (1, 2) mittels Schaltmitteln (108, 208...110, 210) zuschaltbare Kapazitäten (105, 205...107, 207) aufweist sowie Mittel (11) zum Ansteuern der Schaltmittel (108, 208...110, 210),
**dadurch gekennzeichnet**, daß
jede zuschaltbare Kapazität (105, 205...107, 207) eine erste und eine zweite Teilkapazität (105, 205...107, 207) umfaßt und daß die Teilkapazitäten (105, 205...107, 207) jeweils über mindestens ein Schaltmittel (108, 208...110, 210) miteinander verbindbar sind und
daß ein Verbindungsknoten zwischen jeder ersten und zweiten Teilkapazität (105, 205; 107, 207) auf einen Anschluß (22) für ein Bezugspotential (VSS) schaltbar ist.

2. System nach Anspruch 1,
**dadurch gekennzeichnet**, daß die Mittel (11) bei Inbetriebnahme des Systems ausgehend von einem Mittelwert einen Abgleich des Schwingkreises (1, 2) vornehmen, indem die zusätzlichen Kapazitäten (5, 6, 7) zu- bzw. weggeschaltet werden.

3. System nach Anspruch 2,
**dadurch gekennzeichnet**, daß ein nichtflüchtiges Speichermittel (12) vorgesehen ist, in dem die ermittelten Werte zum Abgleich des Schwingkreises (1, 2) abgespeichert werden.

4. System nach einem der vorhergehenden Ansprüche,
**dadurch gekennzeichnet**, daß der Schwingkreis (1, 2) einen ersten Anschluß (4), an den die erste Kapazität (105; 107) angeschlossen ist, und einen zweiten Anschluß (3), an den die zweite Kapazität (205; 207) angeschlossen ist, aufweist, daß die erste und zweite Kapazität jeweils über ein Schaltmittel (108, 208; 110, 210) mit einem Anschluß für ein Versorgungspotential (VSS) verbunden sind und daß die Schaltmittel gleichsinnig ansteuerbar sind.

5. System nach Anspruch 4,
**dadurch gekennzeichnet**, daß das Versorgungspotential (VSS) aus der an den Anschlüssen (3, 4) des Schwingkreises (1, 2) abgreifbaren Spannung mittels Gleichrichtung (20) und Glättung (23) gewonnnen wird.

## Claims

1. System for contactless power and data transmission between a mobile station and a stationary station, in which the mobile station has a tunable resonant circuit (1, 2) which is driven by a control circuit (12), the control circuit (12) having a multiplicity of capacitors (105, 205...107, 207), which can be switched in in parallel with the resonant circuit (1, 2), by switching means (108, 208...110, 210), as well as means (11) for driving the switching means (108, 208...110, 210), characterized in that each capacitor (105, 205...107, 207) which can be switched in comprises a first and a second partial capacitor (105, 205...107, 207), and in that the partial capacitors (105, 205...107, 207) can each be connected to one another via at least one switching means (108, 208...l10, 210), and in that a connection node between each first and second partial capacitor (105, 205; 107, 207) can be connected to a terminal (22) for a reference potential (VSS).

2. System according to Claim 1, characterized in that, during the start-up of the system, the means (11) perform tuning of the resonant circuit (1, 2) starting from a mean value, by switching the additional capacitors (5, 6, 7) in or out.

3. The system according to Claim 2, characterized in that a nonvolatile memory means (12) is provided in which the determined values for tuning the resonant circuit (1, 2) are stored.

4. System according to one of the preceding claims, characterized in that the resonant circuit (1, 2) has a first terminal (4), to which the first capacitor (105; 107) is connected, and a second terminal (3) to which the second capacitor (205; 207) is connected, in that the first and second capacitors are each connected via a switching means (108, 208; 110, 210) to a terminal for a supply potential (VSS), and in that the switching means can be driven with the same biasing.

5. System according to Claim 4, characterized in that the supply potential (VSS) is obtained from the voltage which can be picked off at the terminals (3, 4) of the resonant circuit (1, 2) by means of rectification (20) and smoothing (23).

## Revendications

1. Système pour la transmission d'énergie et de données sans contact entre un poste mobile et un poste fixe, dans lequel le poste mobile comporte un circuit (1, 2) oscillant qui peut être accordé et qui est commandé par un circuit (12) de commande, le circuit (12) de commande comportant une pluralité de capacités (105, 205 ... 107, 207) pouvant être montées parallèle avec le circuit (1, 2) oscillant à l'aide de moyens (108, 208 ... 110, 210) de commutation ainsi que des moyens (11) destinés à commander les moyens (108, 208 ... 110, 210) de commutation,
caractérisé en ce que chaque capacité (105, 205 ... 107, 207) pouvant être branchée comporte une première et une seconde capacités (105, 205 ... 107, 207) partielles et en ce que les capacités (105, 205 ... 107, 207) partielles peuvent être reliées chacune par l'intermédiaire d'au moins un moyen (108, 208 ... 110, 210) de commutation l'une à l'autre et en ce qu'un noeud de liaison entre chaque première et seconde capacité (105, 205 ; 107, 207) partielle peut être branchée à une borne (22) d'un potentiel (VSS) de référence.

2. Système suivant la revendication 1,
caractérisé en ce que les moyens (11) effectuent, lors de la mise en fonctionnement du système, un ajustement du circuit (1, 2) oscillant à partir d'une valeur moyenne, en branchant ou en débranchant les capacités (5, 6, 7) supplémentaires.

3. Système suivant la revendication 2,
caractérisé en ce qu'il est prévu un moyen (12) à mémoire non volatile, dans lequel la valeur déterminée pour l'ajustement du circuit (1, 2) oscillant est mémorisé.

4. Système suivant l'une des revendications précédentes,
caractérisé en ce que le circuit (1, 2) oscillant comporte une première borne (4) à laquelle est reliée la première capacité (105, 107), et une seconde borne (3) à laquelle est reliée la seconde capacité (205, 207), en ce que les première et seconde capacités sont reliées par l'intermédiaire d'un moyen (108, 208 ; 110, 210) de commutation à une borne pour un potentiel (VSS) d'alimentation et en ce que les moyens de commutation peuvent être commandés dans le même sens.

5. Système suivant la revendication 4, caractérisé en ce que le potentiel (VSS) d'alimentation est obtenu à partir de la tension pouvant être prélevée aux bornes (3, 4) du circuit (1, 2) oscillant, à l'aide d'un redressement (20) et d'un lissage (23).
